Europäisches Patentamt

European Patent Office

Office européen des brevets

(19)

(11) EP 1 288 822 A1

(12) **EUROPEAN PATENT APPLICATION**

(43) Date of publication:
05.03.2003 Bulletin 2003/10

(51) Int Cl.⁷: $G06F\ 17/60$

(21) Application number: 02250481.5

(22) Date of filing: 24.01.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.08.2001 JP 2001260648**

(71) Applicants:
- **NISSAN MOTOR COMPANY, LIMITED**
  **Yokohama-shi, Kanagawa 221-0023 (JP)**
- **Nissan Financial Services Co., Ltd**
  **Minato-ku, Tokyo 108-8323 (JP)**

(72) Inventors:
- **Murase, Kenji,**
  **c/o Nissan Financial Serv. Co. Ltd.**
  **Chiba-shi, Chiba 261-7114 (JP)**
- **Takizawa, Mitsuhiro**
  **c/o Nissan Fin. Serv. Co. Ltd.**
  **Chiba-shi, Chiba 261-7114 (JP)**
- **Onoguchi, Takashi, c/o Nissan Fin. Serv. Co. Ltd.**
  **Chiba-shi, Chiba 261-7114 (JP)**
- **Imai, Mariko, c/o Nissan Financial Serv. Co. Ltd**
  **Chiba-shi, Chiba 261-7114 (JP)**
- **Takagi, Ryuichir,o c/o Nissan Fin. Serv. Co. Ltd.**
  **Chiba-shi, Chiba 261-7114 (JP)**
- **Hattori, Takao, c/o Nissan Fin. Serv. Co. Ltd.**
  **Chiba-shi, Chiba 261-7114 (JP)**
- **Kasahara, Yasuji, c/o Nissan Fin. Serv. Co. Ltd.**
  **Chiba-shi, Chiba 261-7114 (JP)**
- **Doi, Takashi**
  **Yokosuka-shi, Kanagawa 239-0823 (JP)**

(74) Representative: **Godwin, Edgar James et al**
  **MARKS & CLERK,**
  **57-60 Lincoln's Inn Fields**
  **London WC2A 3LS (GB)**

(54) **Method and system for lease**

(57) A lease payment plan for leasing property such as a motor vehicle for a specified lease period is determined, by setting a shorter period shorter than the lease period, from a partial cost to be recouped within the shorter period and an entire cost to be recouped over the entire lease period. The partial cost is calculated in accordance with an initial value of the property and a first residual value at the end of the shorter period. The entire cost is calculated in accordance with the initial value of the property and a second residual value at the expiration of the lease period.

**FIG.1**

EP 1 288 822 A1

**Description**

The present invention relates to leasing of property such as motor vehicles, and to lease planning method and system for making lease plans (including amounts of payments, paying options and conditions for changes of articles or vehicles), and apparatus for obtaining or presenting information about lease plans.

Terminating a lease contract early before the end of a specified lease period is costly in general. In many cases, an early termination charge is so high to meet user's demand for changes to new cars or different cars.

It is an object of the present invention to provide method, system and/or apparatus for preparing and/or obtaining a lease plan facilitating alteration of the lease before the scheduled end of the lease.

According to the present invention, a lease planning method of preparing a lease plan for leasing property for a specified lease period, comprises: setting a shorter period shorter than the lease period; estimating a first residual value of the property at the expiration of the shorter period; calculating a partial cost to be recouped within the shorter period, in accordance with an initial value of the property and the first residual value at the expiration of the shorter period; estimating a second residual value of the property at the expiration of the lease period; calculating an entire cost to be recouped over the lease period, in accordance with the initial value of the property and the second residual value at the expiration of the lease period; and determining a lease payment in accordance with the partial cost to be recouped within the shorter period and the entire cost to be recouped over the lease period.

According to the present invention, a lease planning system of preparing a lease plan for leasing property for a specified lease period comprises: a first residual value estimating section to estimate a first residual value of the property at the expiration of a preset shorter period; a partial cost calculating section to calculate a partial cost to be recouped within the shorter period, in accordance with an initial value of the property and the first residual value at the expiration of the shorter period; a second residual value estimating section to estimate a second residual value of the property at the expiration of the lease period; an entire cost calculating section to calculate an entire cost to be recouped over the lease period, in accordance with the initial value of the property and the second residual value at the expiration of the lease period; and a lease payment determining section to determine a lease payment in accordance with the partial cost to be recouped within the shortened period and the entire cost to be recouped over the lease period.

According to another aspect of the present invention, a lease plan presenting apparatus comprises: a communicating section to transmit information on property to be leased for a specified lease period and to receive information on a lease payment; and an output section to present the information on the lease payment determined in accordance with a partial cost to be recouped within a preset shorter period and an entire cost to be recouped over the lease period, by setting the shorter period shorter than the lease period, estimating a first residual value of the property at the expiration of the shorter period, calculating the partial cost in accordance with an initial value of the property and the first residual value, estimating a second residual value of the property at the expiration of the lease period, calculating the entire cost in accordance with the initial value of the property and the second residual value.

According to still another aspect of the invention, a lease planning apparatus for preparing a lease plan for a specified lease period, the apparatus comprises: means for setting a shorter period expiring before the expiration of the lease period; and means for providing a lease payment determined in accordance with a partial cost to be recouped within the shorter period and an entire cost to be recouped over the lease period. The partial cost is an amount calculated in accordance with an initial value of the property and a first residual value of the property at the is an amount calculated in accordance with the initial value of the property and a second residual value of the property at the expiration of the lease period.

The other objects and features of this invention will become understood from the following description with reference to the accompanying drawings.

**BRIEF DESCRIPTION OF THE DRAWINGS**

FIG. 1 is a block diagram showing a lease planning system according to a first embodiment of the present invention.

FIG. 2 is a flowchart showing a procedure performed by the lease planning system of FIG. 1.

FIGS. 3A and 3B are graphs showing a lease payment plan according to the first embodiment.

FIG. 4 is a block diagram showing a lease planning system according to a second embodiment of the present invention.

**DETAILED DESCRIPTION**

In a lease plan of one approach, lease payments are calculated on the basis of a total depreciation over a lease period, that is, the difference between an original value of property and a projected value (residual value) of the property at the end of the lease, and one or more related charges.

In an example of a vehicle lease, a user or lessee determines make, model, grade, body color and optional equipment of a vehicle at user's choice, and further determines the length of the lease and paying options or paying mode (the zero or nonzero amount of down payment, and selection between a paying schedule of equal monthly payments and a paying schedule of regular monthly payments and bonus month's increased payments).

A leasing company or lessor ascertains a vehicle's value of the vehicle (a value of a new or a value of a used vehicle at the beginning of the lease) by obtaining data from database containing information of vehicle prices or a price list. The leasing company estimates a residual value of the leased vehicle by using information on used vehicle market prices. A primary lease amount is then determined by subtracting the residual value from the vehicle's price (or capitalized cost). A total lease amount is equal to the sum of the primary lease amount and related miscellaneous expenses. That is, [total lease amount] = [vehicle's value] - [residual value] + [related expenses]. A used car market price is determined not only by vehicle specifications, but the used car market price is largely influenced by the mileage. Accordingly, in many cases, leasing restricts the use of a lessee by setting a mileage limit. For example, an excess mileage fee is charged if the monthly mileage exceeds a monthly mileage limit of 1,000 km. Lease payments are calculated in accordance with the thus-determined total lease amount and a paying mode chosen by the user.

Users often wish to change vehicles in the middle of a lease contract. However, a vehicle depreciates (decreases in value) rapidly in early months to a considerably low residual value, and hence the alteration or termination of a lease contract generally incurs a costly early termination fee charged to cover the gap between the cost to be recouped or recovered by the leasing company and the sum of the total amount paid to the time of the early termination and the residual value at that time.

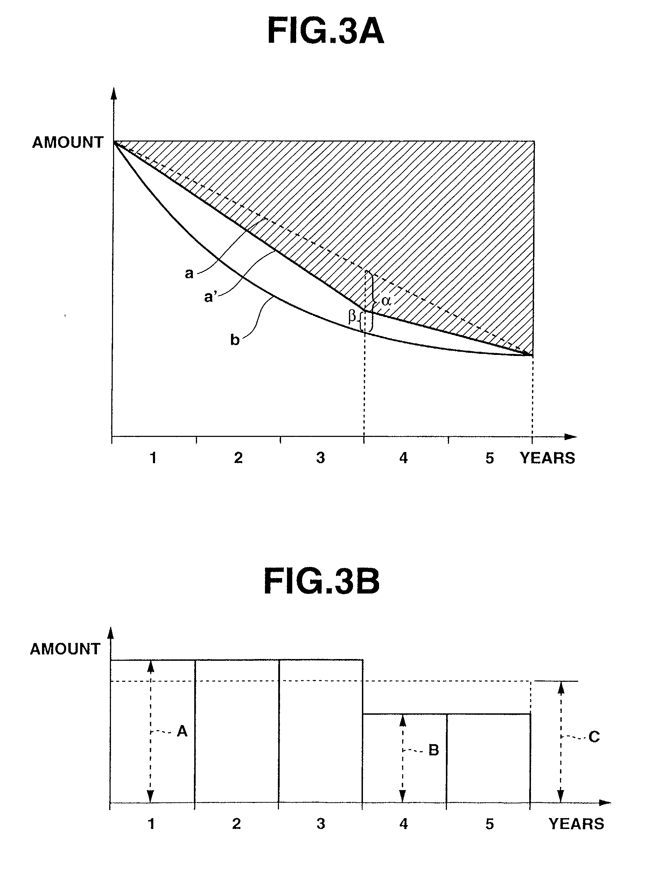

In FIG. 3A, a triangle region above a broken straight line "a" indicates a cost the leasing company can recoup or recover from the lessee in an example of a five year vehicle lease. The sum of the cost recouped over the full-length lease period and the residual value at the lease end is equal to the total lease amount. However, the residual value of a vehicle decreases sharply from the beginning of registration of the vehicle, and thereafter the residual value decreases more gradually, as shown by a curved line "b" in FIG. 3A. Because of this tendency, if the lease is terminated, before the scheduled end of the lease contract, at the end of the third year at which a motor vehicle inspection is required, there arises a deficit $\alpha$ between the total lease amount and the sum of the cost recovered until the end of the third year and the residual value at the end of the third year. This tendency of depreciation is common to vehicles of various types. Therefore, many lease contracts inhibit early termination except for special cases, or charge expensive early termination fee to cover the deficit $\alpha$. Thus, many lease payment systems cannot meet the user's demand for newer cars. The following embodiments according to the present invention are devised to solve this problem.

Below are definitions to terms used hereinafter. Predetermined period or lease period (or lease term) is an entire length of time the property is leased. The lease period is determined at the beginning of the lease. In the case of car leasing, the lease period may be 5 years, for example. Preset shorter (or shortened) period is a period of time shorter than the lease period. The preset shorter period is set within the lease period. The shorter period starts simultaneously with the lease period or starts after the start of the lease period. The shorter period ends earlier before the end of the lease period. The shorter period allows alteration of the lease at the end of the shorter period before the end of the lease period. In the case of 5 year car lease, the shorter period may be 3 years, for example. It is optional to set a plurality of preset shorter periods of different lengths. Vehicle's price is a sum of a price of the vehicle plus a price of options etc. Initial or original price (or current price) is a price of the property at the beginning of the lease. In the case of new car leasing, the initial price is a price of a new car. In the case of used car leasing, the initial price is a price of a used car at the beginning of the lease. The initial price is the sum of the price of a vehicle plus the price of options. Residual value is a predicted value of the property at the time the lease period expires or at the time the shorter period expires. Additional expense or charge is a total amount of miscellaneous related expenses. In this example, the additional expense is a sum of charges for vehicle registration (inclusive of vehicle acquisition tax and vehicle weight tax) + payments for insurance such as automobile third party liability insurance and automobile tax + consumption tax + related fees + interest. Although the following embodiments take, as an example, car leasing, the present invention is applicable to various other leasing. The method and system according to the present invention are specifically advantageous when applied to property whose residual value falls rapidly in early months of the lease period and thereafter the depreciation becomes more gradual.

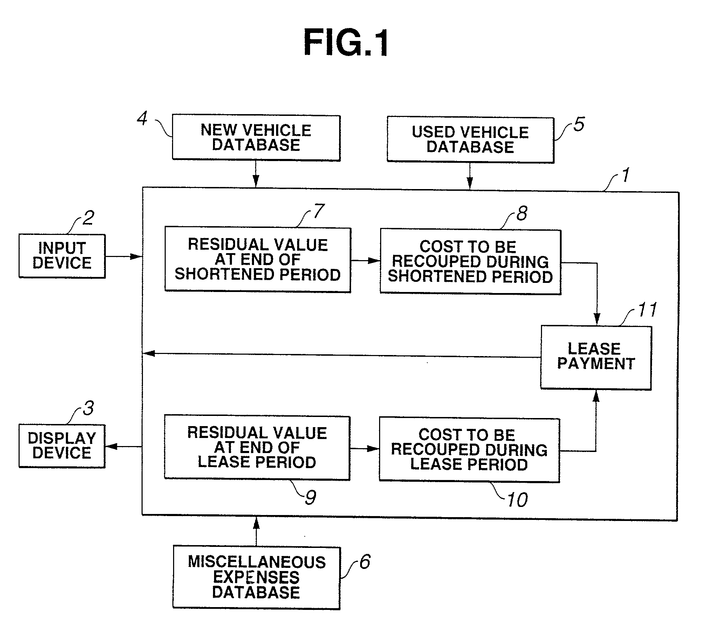

FIG. 1 shows a lease planning system according to a first embodiment of the present invention. In this embodiment, the property used or occupied under the lease contract is a motor vehicle.

A processing device 1 shown in FIG. 1 includes, as a main component, a digital computer. An input device 2 of this example includes a keyboard. An output device 3 of this example includes a display device of LCD or CRT. A new vehicle (article) database 4 contains a collection of data on makes, models, grades, body colors of new vehicles, and kinds and prices of optional parts. A used vehicle (article) database 5 contains a collection of data on lengths of use (in years) and market prices of used vehicles. A third database 6 contains data on miscellaneous expenses of vehicles.

In the block of processing device 1 in FIG. 1, there are smaller blocks representing functions performed by processing device 1. In the example of FIG. 1, processing device 1 includes a first residual value estimating section 7 for estimating a first (early-termination) residual value at the expiration of a preset shorter period, a first (partial) cost calculating section 8 for calculating a first (or partial) cost to be recouped within the preset shorter period, a second residual value estimating section 9 for estimating a second (or lease-end) residual value at the expiration of the lease period, a second (entire) cost calculating section 10 for calculating a second (or entire) cost to be recouped during the lease period, and a lease payment determining section 11 for determining a lease payment plan.

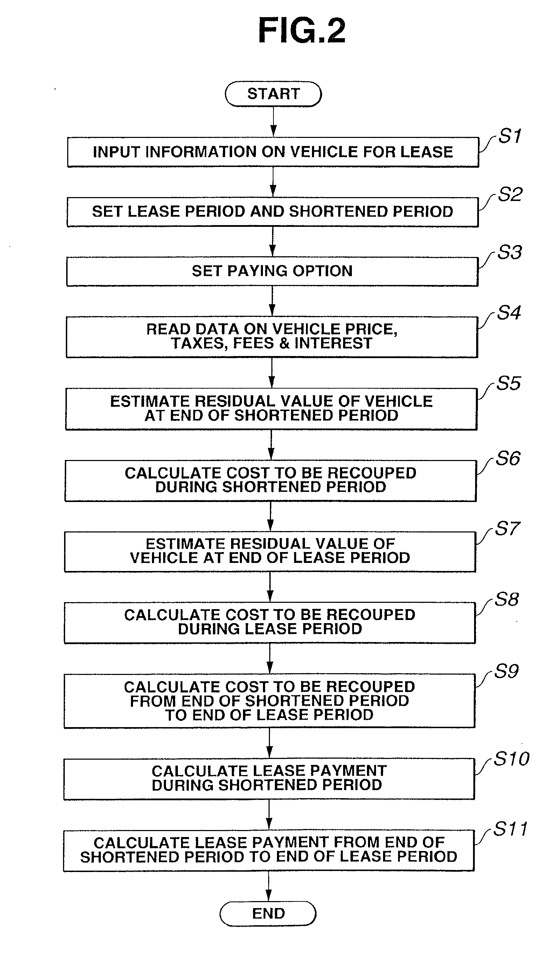

FIG. 2 shows a procedure performed by processing device 1.

Step S1 is a step for obtaining information on property that is leased, according to choice of a user. In this example, the property is an automobile, and the information includes data items such as make, model, type, grade and body color of the vehicle to be leased and optional equipment. The information is inputted by using input device 2.

Step S2 sets at least one preset shorter or shortened period and a full-length period. The full-length period is a lease period or term which is an entire length of the lease. In this example, the lease period is five years. The preset shorter period is a shortened period set to expire at a proper time at which a change of vehicles is probable. In this example, the preset shorter period is equal to 3 years so that the preset shorter period expires concurrently at the time of a specified automobile inspection. It is optional to set a plurality of preset shorter periods. In the case of a 7 year lease, the lease period is 7 years, a first preset shorter period is a 3 years period, and a second preset shorter period is a period of 2 years from the end of the first preset shorter period (or five years from the beginning of the lease). The preset shorter period and lease period can be inputted by input device 2. Alternatively, popular periods (5 years and 3 years, for example) are determined in advance, so that one of the preset periods can be selected therefrom.

Step S3 determines payment option or paying schedule of the lessee including data items about down payment, and selection between a paying schedule of equal monthly payments and a paying schedule of regular monthly payments and bonus month's increased payments. In general, the lessee can choose one of several paying schedules preliminarily determined by the leasing company. Data about the paying schedule is inputted by selecting items through input device 2 from a list of options displayed on display device 3 in accordance with the choice of the lessee.

Step S4 is a step to read data about vehicle's price, used vehicle's price, taxes, related fees and interest regarding the vehicle to be leased. Processing device 1 obtains data on the vehicle's price from vehicle database 4, data on the used vehicle's price from used vehicle database 5 and data on the taxes, fees and interest from the miscellaneous expenses database 6. Data on the vehicle's price can be inputted by input device 2. The vehicle's price is the sum of the price of the vehicle and the price of optional equipment.

The order of these steps S1~S4 is not limited to the order shown in FIG. 2. Steps S1~S4 can be carried out in various other orders, provided that step S1 should be prior to step S4.

Step S5 is for estimating a first residual value of the vehicle at the expiration of the preset shorter period. Step S5 corresponds to first residual value estimating section 7 shown in FIG. 1. In this example, this estimation is performed on the basis of used vehicle prices obtained from used vehicle database 5, in accordance with a trend of the price of the leased vehicle or the price of a vehicle of the same type, to determine the projected value of the vehicle at the end of the three year period. Since the mileage of the vehicle exerts influence on the residual value, a lease contract often imposes a mileage limitation, that is the maximum mileage the lessee is allowed without excess mileage fee. The mileage limit is 1,000 km per month, for example. By setting mileage limitation during the preset shorter period stricter than mileage limitation (of 1,500km/month, for example) during the two year period after the end of the three year preset shorter period, it is possible to restrain the depreciation of the leased vehicle during the preset shorter period and hold the residual value at the level of the project value determined at the beginning.

Step S6 calculates a first cost to be recouped within the preset shorter period (that is, the total amount of payments by the lessee during the three year period). Step S6 corresponds to first cost calculating section 8 shown in FIG. 1. The cost to be recouped during the present shorter period is equal to the difference obtained by subtracting the residual value of the vehicle at the end of the present shorter period, from the sum of the initial vehicle's price and the miscellaneous expenses (or a gross capitalized cost). The initial vehicle's price is the vehicle's price in the case of a new vehicle. In the case of a used vehicle, the initial value is a market price of the used vehicle obtained from used vehicle database 5. In the case of a finance contract (in which insurance premium is included, but maintenance fee and motor vehicle inspection fee are charged to the lessee), the miscellaneous expenses does not include the inspection fee. In the case of maintenance lease or full maintenance leas, the miscellaneous expenses include the maintenance fee and inspection fee.

Step S7 estimates the lease-end (second) residual value of the vehicle at the expiration of the lease period. Step S7 corresponds to second residual value estimating section 9 of FIG. 1. In this example, the lease-end (second) residual value is estimated, in the same manner as in step S5, as a value of the vehicle five years later. A use condition such as monthly mileage limit is set for the remaining period after the end of the preset three year period. The use condition may be identical to the use condition in step S5, or may be less stringent (for example, the monthly mileage limit is increased to 1,500 km).

Step S8 calculates the entire (second) cost to be recouped over the full-length lease period (that is, the total amount of lease payments the user must pay over the five year lease period). Step S8 corresponds to second cost calculating section 10. The entire cost for the five year period is calculated substantially in the same manner as in step S6.

Step S9 calculates a remaining (third) cost to recouped during the remaining period from the end of the three year preset shorter period, to the end of the full-length lease period. The remaining cost is equal to the difference resulting from subtraction of the partial cost calculated at step S6, from the entire cost calculated at step S8.

Step S10 calculates a lease payment amount during the preset shorter period. This calculation is based on the partial cost to be recouped within the preset shorter period, and the user-chosen payment schedule or option determined at step S3. The lease payment may include an adjustment fee (such as early termination fee). In this case, the total lease amount the user must pay over the three year preset shorter period is given as;

[total lease amount over 3 years] = [vehicle's price] + [miscellaneous expenses] - [residual value at the end of the three year period] - [adjustment fee]

The adjustment fee is the amount the user owes if the vehicle is returned at the end of the preset shorter period. For example, the adjustment fee is set equal to the difference obtained by subtracting the lease amount already paid, from the cost to be recouped during the preset shorter period.

Step S11 calculate a lease payment amount during the remaining (two year) period from the end of the preset (three year) shorter period to the end of the (five year) lease period. This lease payment amount is calculated in accordance with the remaining cost to be recouped from the end of the preset shorter period to the end of the lease period, calculated at step S9, and the payment schedule chosen by the user, determined at step S3. Steps S9~S11 correspond to lease payment determining section 11 of FIG. 1. Thus, the lease payments (for the five years) includes payments determined at step S10 for the preset shorter period (the first three years) and payments determined at step S11 for the remaining period from the end of the preset shorter period to the end of the lease period (the last two years).

FIGS. 3A and 3B show a payment system or plan in this embodiment. FIG. 3A shows the total payment amount "a'", the residual value b and the difference (or gap) therebetween. FIG. 3B shows annual lease payments. As shown in FIG. 3A, the total payment amount "a'" decreases sharply up to the end of the third year as expressed as a first straight line segment of a bent line. Thereafter, the total payment amount "a'" decreases gradually as shown by a second straight line segment of a gradual slope more gradual than the slope of the first line segment. At the end of the third year, therefore, the difference (or gap) β between the total lease amount "a'" and the residual value "b" is significantly small as compared to the difference α between the broken straight line "a" and the residual value. In general, this difference is charged to the user in the name of adjustment charge, settlement charge or early termination fee. The lease planning method according to this embodiment can reduce the amount of this fee for early termination significantly, and facilitate change to a new vehicle by the user.

As shown in FIG. 3B, the cost recouped during the first three years is relatively high, and the cost recouped during the last two years is relatively low. However, the total cost recouped over the five years remain unchanged as compared to the ordinary payment plan. As shown in FIG. 3B, an annual payment "A" during the first three years of the payment plan according to this embodiment is higher than an annual payment "C" of the ordinary payment plan of even payments over the five year period. An annual payment "B" during the last two years of the embodiment is lower than the annual payment "C" of the ordinary plan.

In the case of a finance contract in which the lessee assumes the responsibility for the maintenance fees and motor vehicle inspection fees, it is possible to further promote change to a new vehicle by the lessee by setting the lease period coincident with the period of a vehicle inspection of a new vehicle, and setting the adjustment fee (or early terminal fee) lower than the projected amount of cost for the vehicle inspection.

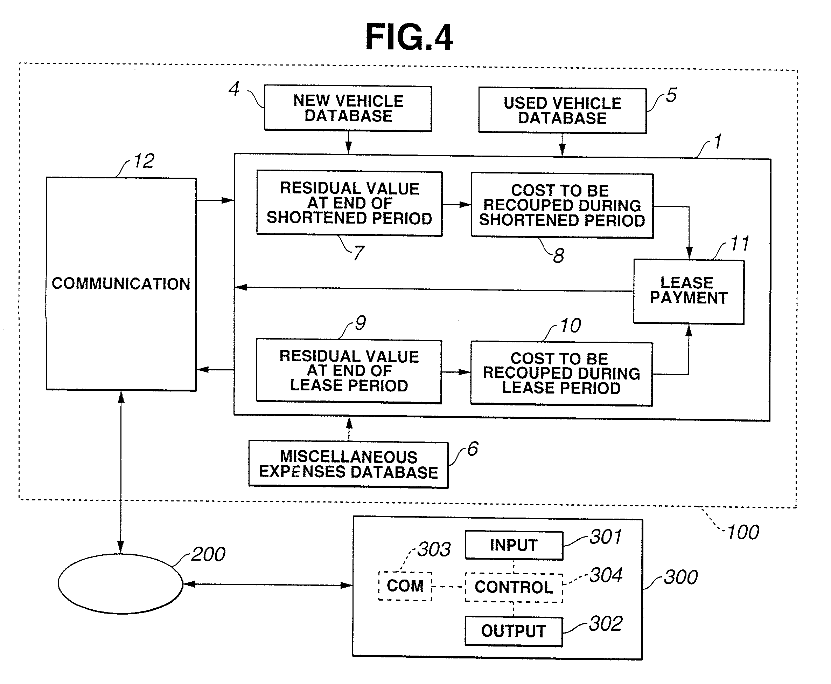

FIG. 4 shows a lease planning system according to a second embodiment of the present invention. The system of FIG. 4 is designed to conduct electronic commerce (e-commerce) through communication network such as the Internet, among a leasing company (or lessor) and users (or lessees).

A server 100 is a system component of a leasing company or lessor. Server 100 includes a communication section 12 in addition to a processing device or section 1 substantially identical to the processing device 1 of FIG. 1. Through server 100, the leasing company provides various services on web (WWW) pages such as introduction of leasing and lease plans, and acceptance of offers of lease contract from users.

A device 300 is a terminal device of one of users. Terminal device 300 may be a personal computer or a mobile phone. Terminal device 300 of this example has an input section 301 including a keyboard. The user can access the web pages of server 100, and input information on a desired vehicle for lease, optional equipment and payment options, and transmit the information to server 100 through communication network 200.

Communication section 12 of server 100 receives information through communication network 200 and processing device 1 prepares a lease plan based on the received information according to the procedure shown in FIG. 2 as in the first embodiment. Then, communication section 12 transmits information on the lease plan through communication network 200 to terminal device 300 of the user. Terminal device 300 has an output section (including a display and/or a printer) 302 for presenting the received information to the user. Terminal device 300 of this example further includes a communication section 303 for transmitting and receiving information to and from server 100 through communication network 200, and a control section (or processing section) 304 for processing data.

Terminal device 300 may be a device on the lessor's side. For example, server 100 is installed in a main office of the leasing company, and terminal device 300 is installed in a remote office or a shop of a dealer or carried by a salesperson. A salesperson or a user can input data on a vehicle to be leased through terminal device 300, and receive information about a proposed or agreed-upon lease plan from server 100. The information is displayed on a display of output section 302, or printed out by a printer. In this case, communication network 200 may be a dedicated line or leased line between the main office and the remote office of the leasing company or the dealer.

Terminal device 300 serves as a lease plan presenting apparatus including a presenting section (302 and/or 304) for presenting a lease plan prepared by the lease planning method according to the present invention. With the remote terminal device 300, a user can access a lease planning server system through communications network and obtain information on a lease plan.

Input device 2, input section 301 of terminal device 300, or communication section 12 serves as means for setting a shorter period expiring before the expiration of the lease period. Processing device 1 or control section 304 of terminal device 300 can serve as means for providing information on a lease payment in the form of signal or signals suitable for transmission or visible or audible presentation.

This application is based on a prior Japanese Patent Application No. 2001-260648. The entire contents of the Japanese Patent Application No. 2001-260648 with a filing date of August 30, 2001 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A lease planning method of preparing a lease plan for leasing property for a specified lease period, the method comprising:

   setting (S2) a shorter period shorter than the lease period;
   estimating (S5) a first residual value of the property at the expiration of the shorter period;
   calculating (S6) a partial cost to be recouped within the shorter period, in accordance with an initial value of the property and the first residual value at the expiration of the shorter period;
   estimating (S7) a second residual value of the property at the expiration of the lease period;
   calculating (S8) an entire cost to be recouped over the lease period, in accordance with the initial value of the property and the second residual value at the expiration of the lease period; and
   determining (S10, S11) a lease payment in accordance with the partial cost and the entire cost.

2. The lease planning method as claimed in Claim 1, wherein the lease planning method further comprises calculating (S9) a remaining cost to be recouped during a remaining period from the expiration of the shorter period to the expiration of the lease period by subtraction of the partial cost from the entire cost; and wherein the lease payment is determined by determining a first payment during the shorter period in accordance with the partial cost to be recouped within the shorter period, and by determining a second payment during the remaining period in accordance with the remaining cost.

3. The lease planning method as claimed in Claim 2, wherein the partial cost to be recouped within the shorter period is calculated in consideration of a preset adjustment charge to be charged if the lease is altered at the expiration of the shorter period before the expiration of the lease period.

4. The lease planning method as claimed in Claim 3, wherein the property is a motor vehicle, the shorter period is timed to a period of a motor vehicle inspection, and the adjustment charge is set lower than a projected cost of the motor vehicle inspection of the vehicle.

**5.** The lease planning method as claimed in one of Claims 1~4, wherein the first residual value at the expiration of the shorter period is estimated in consideration of a use condition attached to the use of the property by the user.

**6.** The lease planning method as claimed in one of Claims 2~5, wherein the partial cost to be recouped within the shortened period is calculated in accordance with the initial value of the property, the first residual value at the expiration of the shorter period and a first additional expense, and the entire cost to be recouped over the entirety of the lease period is calculated in accordance with the initial value of the property, the second residual value at the expiration of the lease period, and a second additional expense; and wherein the first payment during the shorter period is determined in accordance with the partial cost and a paying mode chosen by a user, and the second payment during the remaining period is determined in accordance with the remaining cost and the paying mode chosen by the user.

**7.** A lease planning system of preparing a lease plan for leasing property for a specified lease period, the lease planning system comprising:

a first residual value estimating section (7) to estimate a first residual value of the property at the expiration of a preset shorter period;
a partial cost calculating section to calculate a partial cost to be recouped within the shorter period, in accordance with an initial value of the property and the first residual value at the expiration of the shortened period;
a second residual value estimating section (9) to estimate a second residual value of the property at the expiration of the lease period;
an entire cost calculating section (10) to calculate an entire cost to be recouped over the lease period, in accordance with the initial value of the property and the second residual value at the expiration of the lease period; and
a lease payment determining section (11) to determine a lease payment in accordance with the partial cost to be recouped within the shorter period and the entire cost to be recouped over the lease period.

**8.** The lease planning system as claimed in Claim 7, wherein the lease planning system further comprises a used article database (5) containing used article values of an article to be leased; and wherein the first residual value estimating section estimates the first residual value of the property in accordance with data in the used article value database, and the second residual value estimating section estimates the second residual value of the property in accordance with data in the used article value database.

**9.** The lease planning system as claimed in Claim 7 or 8, wherein the lease planning system further comprises a communicating section (12) to receive information on the property through a communication network (200) and to transmit information on the lease payment determined by the lease payment determining section through the communication network; and wherein the first residual value estimating section identifies the property in accordance with the data received by the communicating section, and estimates the first residual value of the property at the expiration of the preset shorter period.

**10.** The lease planning system as claimed in one of Claims 7~9, wherein the lease payment determining section (11) is configured to determine a first payment during the shorter period in accordance with the partial cost to be recouped within the shorter period and a paying mode chosen by a user, and to determine a second payment during a remaining period from the expiration of the shorter period to the expiration of the lease period, in accordance with a remaining cost to be recouped during the remaining period and the paying mode, the remaining cost being a difference between the partial cost and the entire cost.

**11.** The lease planning system as claimed in one of Claims 8~10, where the lease planning system further comprises a new article database (4) containing new article values of the article to be leased; and wherein the partial cost calculating section (8) is configured to determine the initial value in accordance with data obtained from the new article data base and to calculate the partial cost to be recouped within the shorter period, in accordance with the initial value of the article and the first residual value at the expiration of the shorter period.

**12.** The lease planning system as claimed in one of Claims 8~10, wherein the lease planning system further comprises an input device (2) to input data to determine the initial value of the property, and to supply the data to the partial cost calculating section (8) to calculate the partial cost to be recouped within the shorter period in accordance with the initial value of the property and the first residual value.

13. The lease planning system as claimed in one of Claims 7~12, wherein the partial cost calculating section calculates the partial cost in consideration of an adjustment charge to be charged if the lease is altered at the expiration of the shorter period, and wherein the property is a motor vehicle, and the first residual value estimating section sets the shorter period in conformity with a period of a motor vehicle inspection, the adjustment charge being set lower than a cost of the motor vehicle inspection.

14. The lease planning method as claimed in one of Claims 7~13, wherein the first residual value estimating section estimates the first residual value at the expiration of the shorter period in consideration of a use condition attached to the use of the property by the user.

15. A lease plan presenting apparatus comprising:

a communicating section (303) to transmit information on property to be leased for a specified lease period and to receive information on a lease payment; and

a presenting section (302, 304) to present the information on the lease payment determined in accordance with a partial cost to be recouped within a preset shorter period and an entire cost to be recouped over the lease period, by setting the shorter period shorter than the lease period, estimating a first residual value of the property at the expiration of the shorter period, calculating the partial cost in accordance with an initial value of the property and the first residual value, estimating a second residual value of the property at the expiration of the lease period, calculating the entire cost in accordance with the initial value of the property and the second residual value.

# FIG.1

Block diagram showing: NEW VEHICLE DATABASE (4), USED VEHICLE DATABASE (5), MISCELLANEOUS EXPENSES DATABASE (6), INPUT DEVICE (2), DISPLAY DEVICE (3), system (1) containing RESIDUAL VALUE AT END OF SHORTENED PERIOD (7), COST TO BE RECOUPED DURING SHORTENED PERIOD (8), RESIDUAL VALUE AT END OF LEASE PERIOD (9), COST TO BE RECOUPED DURING LEASE PERIOD (10), LEASE PAYMENT (11).

# FIG.2

START

INPUT INFORMATION ON VEHICLE FOR LEASE /S1

SET LEASE PERIOD AND SHORTENED PERIOD /S2

SET PAYING OPTION /S3

READ DATA ON VEHICLE PRICE,
TAXES, FEES & INTEREST /S4

ESTIMATE RESIDUAL VALUE OF VEHICLE
AT END OF SHORTENED PERIOD /S5

CALCULATE COST TO BE RECOUPED
DURING SHORTENED PERIOD /S6

ESTIMATE RESIDUAL VALUE OF
VEHICLE AT END OF LEASE PERIOD /S7

CALCULATE COST TO BE RECOUPED
DURING LEASE PERIOD /S8

CALCULATE COST TO BE RECOUPED
FROM END OF SHORTENED PERIOD
TO END OF LEASE PERIOD /S9

CALCULATE LEASE PAYMENT
DURING SHORTENED PERIOD /S10

CALCULATE LEASE PAYMENT FROM END OF
SHORTENED PERIOD TO END OF LEASE PERIOD /S11

END

# FIG.3A

# FIG.3B

# FIG.4

EP 1 288 822 A1

**European Patent Office**

# DECLARATION

which under Rule 45 of the European Patent Convention shall be considered, for the purposes of subsequent proceedings, as the European search report

**Application Number**

EP 02 25 0481

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

A meaningful search is not possible on the basis of all claims because all claims are directed to - Scheme, rules and method for doing business - Article 52 (2)(c) EPC -

The claims relate to subject-matter excluded from patentability under Article 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC; see also Guidelines for Examination in the EPO, Part B, Chapter VIII, 1-6).

The applicant's attention is drawn to the fact that a search may be carried out during examination following a declaration of no search under Rule 45 EPC, should the problems which led to the declaration being issued be overcome (see EPC Guideline C-VI, 8.5).

| Place of search | Date | Examiner |
|---|---|---|
| MUNICH | 4 June 2002 | Kruspig, S |

EPO FORM 1504 (P04C37)